# EUROPÄISCHE PATENTSCHRIFT

(11) **EP 2 722 256 B1**
(45) Veröffentlichungstag und Bekanntmachung des Hinweises auf die Patenterteilung: **10.06.2015**
(21) Anmeldenummer: 13188725.9
(22) Anmeldetag: 15.10.2013
(51) Int. Cl.: B62D 7/14, B62D 7/15, B62D 21/04, B62D 21/18

(54) **Nutzfahrzeug**
Commercial vehicle
Véhicule utilitaire

(30) Priorität: 17.10.2012 AT 11212012
(43) Veröffentlichungstag der Anmeldung: 23.04.2014
(73) Patentinhaber: Rehberger, Ingrid, 5143 Feldkirchen bei Mattighofen (AT)
(72) Erfinder: Gottfried, Anton Johann, A 5143 Feldkirchen bei Mattighofen (AT)
(74) Vertreter: Patentanwaltskanzlei Hübscher

(56) Entgegenhaltungen:
- EP-A1- 1 302 434
- AT-B- 406 571
- DE-A1- 4 219 876
- DE-A1- 19 510 208
- US-A- 5 368 121
- US-A1- 2005 279 563

## Beschreibung

Die Erfindung bezieht sich auf ein Nutzfahrzeug mit zwei Tandemachsen, die um eine gemeinsame Querachse schwenkbar gelagerte Schwingen aufweisen, auf denen über eine Lenkstange miteinander verbundene Achsschenkel der beiden Achsen der Tandemachsen lagern, mit einem die beiden Achsschenkel einer der beiden Achsen der Tandemachsen miteinander verbindenden, hydraulischen Gestänge, das über zwei Stellzylinder an den beiden Achsschenkeln angreift, und mit einem Lenktrieb, der an den Achsschenkeln der beiden Tandemachse angreifende, über eine Steuereinrichtung in einer Reihenschaltung beaufschlagbare, hydraulische Lenkzylinder umfasst.

Zur Verbesserung der Wendigkeit von Nutzfahrzeugen ist es bekannt, sowohl die Vorderachse als auch die Hinterachse lenkbar auszuführen. Als Lenktriebe kommen dabei hydraulische Lenkzylinder zum Einsatz, die an den über Lenkstangen miteinander antriebsverbundenen Achsschenkeln angreifen. Über eine Steuereinrichtung können die Lenkzylinder auf unterschiedliche Weise angesteuert werden, um das Nutzfahrzeug gegebenenfalls mit einer Vorderrad-, einer Hinterrad- oder einer Allradlenkung einschließlich einer Hundeganglenkung betreiben zu können. Für die Allradlenkung ergeben sich besonders einfache Konstruktionsbedingungen, wenn die Lenkzylinder in einer Reihenschaltung beaufschlagt werden, weil in diesem Fall die voneinander abhängige Verstellung der Lenkzylinder ohne zusätzlichen Steuerungsaufwand zwangsläufig erfolgt. Bei einer solchen Reihenschaltung der Lenkzylinder wird bei einer Lenkbeaufschlagung des Lenkzylinders für die eine Achse hydraulisches Druckmittel aus diesem Lenkzylinder zur Lenkbeaufschlagung der anderen Achse in deren Lenkzylinder verdrängt.

Um den Belastungsanforderungen von Nutzfahrzeugen zu genügen, kommen häufig Tandemachsen zum Einsatz, wobei die beiden Achsen dieser Tandemachsen ebenfalls gelenkt werden können. Diese Tandemachsen weisen um eine gemeinsame Querachse schwenkbar gelagerte Schwingen auf, auf denen die Achsschenkel der beiden Achsen der Tandemachse gelagert sind. Da die einander gegenüberliegenden Schwingen voneinander unabhängig verschwenkt werden können, sind zur Sicherstellung der aufeinander abgestimmten Zwangslenkung die auf den einander gegenüberliegenden Schwingen angeordneten Achsschenkel einer der beiden Achsen der Tandemachse über ein hydraulisches Gestänge gekuppelt, das eine gegenseitige Verschwenkung der Schwingen zulässt. Bei Nutzfahrzeugen mit solchen Tandemachsen ist es ebenfalls möglich, die beiden Achsen der Tandemachsen über je einen Lenkzylinder zu betätigen, was wiederum die Möglichkeit einer Reihenschaltung der Lenkzylinder schafft. Solange das hydraulische Druckmittel in der Verbindungsleitung zwischen den beiden Lenkzylindern einer Druckbelastung ausgesetzt wird, was immer dann gegeben ist, wenn die Achsschenkel durch äußere Kräfte einem Drehmoment entgegen der Lenkbeaufschlagung ausgesetzt sind, wird die für eine gute Lenkbarkeit notwendige Abhängigkeit der Lenkausschläge der Achsschenkel der vorderen und hinteren Tandemachse gewährleistet. Bei einer äußeren Drehmomentbelastung der Achsschenkel im Sinne der Lenkbeaufschlagung tritt jedoch zwischen den Kolben der Lenkzylinder eine Sogbelastung auf, die im Bereich der Verbindungsleitung zwischen den Lenkzylindern nicht über das hydraulische Druckmittel aufgenommen werden kann, sodass die Gefahr besteht, dass die gegenseitige Abhängigkeit der Lenkausschläge der vorderen und der hinteren Tandemachse nicht mehr sichergestellt werden kann und das Nutzfahrzeug unter Umständen unlenkbar wird. Zur Vermeidung dieses Nachteils wird üblicherweise von einer an sich vorteilhaften Reihenschaltung der Lenkzylinder Abstand genommen und eine aufwendige Einzelsteuerung der Lenkzylinder vorgesehen.

Die US 2005/0279563 A1 offenbart ein Nutzfahrzeug gemäß dem Oberbegriff des Anspruchs 1.

Der Erfindung liegt somit die Aufgabe zugrunde, ein Nutzfahrzeug der eingangs geschilderten Art so auszugestalten, dass eine Reihenschaltung der Lenkzylinder ermöglich wird, ohne eine Beeinträchtigung des Lenkverhaltens in Kauf nehmen zu müssen.

Die Erfindung löst die gestellte Aufgabe dadurch, dass die beiden Tandemachsen miteinander zusätzlich über ein hydraulisches Gestänge mit zwei je an einem Achsschenkel einer der beiden Achsen der Tandemachsen angreifenden Stellzylindern verbunden sind.

Werden die Achsschenkel der Tandemachse, deren Lenkzylinder über den Lenkzylinder der anderen Tandemachse beaufschlagt wird, im Sinne dieser Beaufschlagung einer äußeren Drehmomentbelastung ausgesetzt, so bewirkt diese Belastung eine entsprechende Beaufschlagung des Kolbens des dieser Tandemachse zugehörigen Stellzylinders des hydraulischen Gestänges, in dem sich somit ein Druck aufbaut, der einer sonst möglichen Verschwenkung der Achsschenkel dieser Tandemachse entgegenwirkt. Mit dem die Achsschenkel der vorderen und hinteren Tandemachsen in einer Antriebsverbindung festhaltenden hydraulischen Gestänge kann somit in konstruktiv einfacher Art die aufeinander abgestimmte Zwangssteuerung der Achsschenkel der beiden Tandemachsen unabhängig von äußeren Krafteinflüssen auf die Fahrzeugräder sichergestellt werden. Wegen des offenen hydraulischen Lenkkreises bleibt eine Lenkungsrückstellung der gelenkten Achsen nach einer Kurvenfahrt zufolge eines Sturzes und einer Spreizung bzw. eines Nachlaufs erhalten.

Damit sich die Lenkgeometrie durch Leckverluste im Bereich der hydraulischen Gestänge nicht verändern kann, empfiehlt es sich, die die Stellzylinder auf der Seite der Kolbenstangen verbindenden Hydraulikleitungen der hydraulischen Gestänge über Rückschlagventile an Druckspeicher anzuschließen, über die Leckverluste einfach ausgeglichen werden.

Die beschriebene Lenkung der Tandemachsen stellt eine wesentliche Voraussetzung für ein ungefedertes, geländegängiges Nutzfahrzeug ohne aufwendige Steuerelektronik dar. Dies gilt insbesondere wenn die beiden Tandemachsen gegeneinander um eine in Fahrzeuglängsrichtung verlaufende Achse drehbar gelagert sind. Zu diesem Zweck können die beiden Tandemachsen je auf einem von zwei koaxialen, gegeneinander um ihre Achse drehbar gelagerten Trägerrohren eines Längsträgers des Fahrgestells angeordnet sein. Ein solcher Längsträger des Fahrgestells bietet darüber hinaus die Möglichkeit, die Fahrzeuglänge an den jeweiligen Bedarf anzupassen, indem der Achsabstand zwischen den beiden Tandemachsen durch eine gegenseitige Längsverschiebung der Trägerrohre des Längsträgers einstellbar ausgeführt wird.

In der Zeichnung ist der Erfindungsgegenstand beispielhaft dargestellt. Es zeigen
- Fig. 1: ein erfindungsgemäßes Nutzfahrzeug in einem schematischen Blockschaltbild und
- Fig. 2: das Fahrgestell eines erfindungsgemäßen Nutzfahrzeugs in einer schematischen Draufsicht.

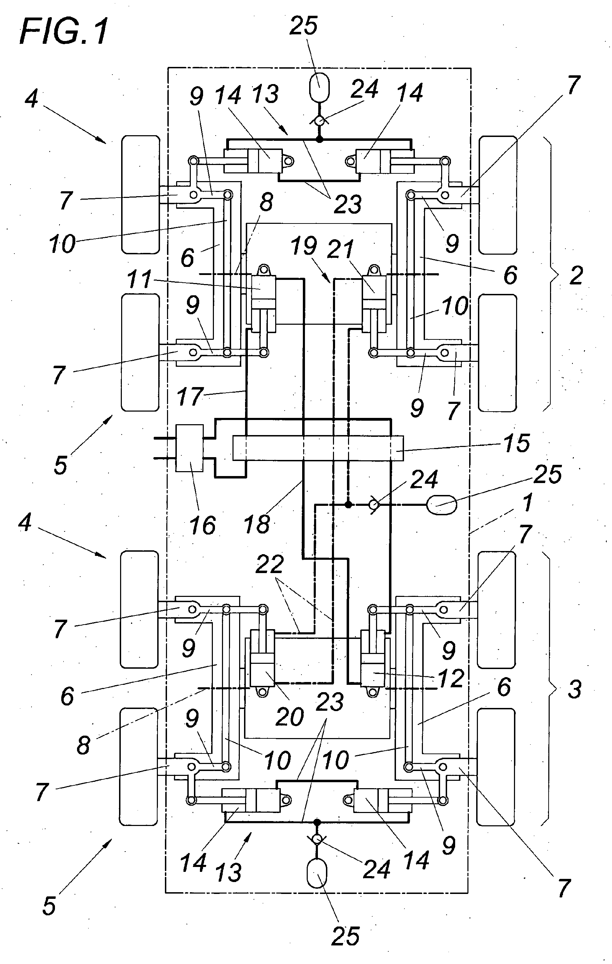

Das dargestellte Nutzfahrzeug 1 weist gemäß dem Blockschaltbild nach der Fig. 1 eine vordere und eine hintere jeweils lenkbare Tandemachse 2, 3 mit je zwei Achsen 4, 5 auf. Die Tandemachsen 2, 3 sind auf jeder Fahrzeugseite mit Schwingen 6 versehen, auf denen die Achsschenkel 7 der beiden Achsen 4, 5 jeder Tandemachse 2, 3 gelagert sind. Da die Schwingen 6 voneinander unabhängig um eine Querachse 8 schwenkbar angeordnet sind, um eine Anpassung an Bodenunebenheiten zu ermöglichen, ist eine mechanische Antriebsverbindung der Achsschenkel 7 auf einander gegenüberliegenden Fahrzeugseiten nicht möglich. Die Achsschenkel 7 der beiden Achsen 4 und 5 werden daher je Schwinge 6 miteinander über Spurhebel 9 und einer Lenkstange 10 verbunden, wobei den in dieser Weise miteinander verbundenen Achsschenkeln 7 je ein Lenkzylinder 11 bzw. 12 zugeordnet ist. Zur Synchronisation der Lenkausschläge der Achsschenkel 7 auf den einander gegenüberliegenden Fahrzeugseiten sind diese Achsschenkel 7 miteinander zusätzlich über ein hydraulisches Gestänge 13 verbunden, das jeweils zwei an den Achsschenkeln 7 angreifende Stellzylinder 14 umfasst.

Die Lenkzylinder 11 und 12 werden über eine Steuereinrichtung 15 beaufschlagt, die alle Steuer- und Schaltelemente umfasst, um lediglich die vordere oder die hintere Tandemachse 2, 3 oder aber auch beide Tandemachsen 2, 3 zu lenken. Bei einer Allradlenkung kann über die Steuereinrichtung 15 im Bedarfsfall auch eine Beaufschlagung der Lenkzylinder 11, 12 für einen Hundegang gewählt werden. Die Lenkung selbst erfolgt für den über die Steuereinrichtung 15 einstellbaren Betriebszustand durch übliche Lenkventile 16.

In der Zeichnung ist die Steuereinrichtung 15 durch die Andeutung entsprechender Schaltverbindungen in einer Schaltstellung für eine Allradlenkung gezeichnet. Man erkennt, dass die beiden Lenkzylinder 11, 12 in einer Reihenschaltung in den hydraulischen Lenkkreis eingebunden sind, sodass beispielsweise bei einer Beaufschlagung des Lenkzylinders 11 über die Druckleitung 17 die miteinander über die Lenkstange 10 verbundenen Achsschenkel 7 auf der linken Fahrzeugseite und über das hydraulische Gestänge 13 auch die Achsschenkel 7 der Achsen 4, 5 auf der rechten Fahrzeugseite gegen den Uhrzeigersinn verschwenkt werden. Die Räder der beiden Achsen 4, 5 der vorderen Tandemachse 2 werden somit auf beiden Fahrzeugseiten synchron gelenkt.

Mit der Beaufschlagung des Lenkzylinders 11 wird auch der Lenkzylinder 12 beaufschlagt, weil das hydraulische Druckmittel durch den Kolben des Lenkzylinders 11 über die Druckleitung 18 in den Lenkzylinder 12 gepumpt wird, der demzufolge eine Auslenkung der Achsschenkel 7 der hinteren Tandemachse 3 im Uhrzeigersinn bedingt. Werden die Lenkventile 16 umgeschaltet, so wird der Lenkzylinder 12 über die Lenkventile 16 mit hydraulischem Druckmittel versorgt, sodass sich ein gegensinniger Lenkausschlag ergibt.

Bei einer Drehmomentbeaufschlagung der beispielsweise im Uhrzeigersinn ausgelenkten Räder der hinteren Tandemachse 3 durch äußere Kräfte im Uhrzeigersinn kann diese Drehmomentbelastung der Achsschenkel 7 der hinteren Tandemachse 3 nicht über das hydraulische Druckmittel in der Druckleitung 18 aufgenommen werden, weil das hydraulische Druckmittel in diesem Fall zwischen den Kolben der Lenkzylinder 11 und 12 einer Sogbelastung unterworfen wird. Es besteht daher die Gefahr, dass fehlerhafte Lenkstellungen auftreten, die unter Umständen das Nutzfahrzeug 1 unlenkbar machen. Um solchen Fehlauslenkungen entgegenwirken zu können und eine zwingende Abhängigkeit zwischen den Lenkausschlägen der Achsschenkel 7 der vorderen und der hinteren Tandemachse 2, 3 sicherzustellen, werden die beiden Tandemachsen 2, 3 miteinander zusätzlich durch ein strichpunktiert angedeutetes hydraulisches Gestänge 19 verbunden, das zwei je einer Tandemachse 2, 3 zugeordnete Stellzylinder 20 und 21 aufweist, die an einem der Achsschenkel 7 dieser Tandemachsen 2, 3 angreifen.

Wird demnach beispielsweise die hintere Tandemachse 3 durch äußere Kräfte mit einem Drehmoment beaufschlagt, das eine Zugbelastung des hydraulischen Druckmittels in der Druckleitung 18 bewirkt, so wird der Stellzylinder 20 über den zugehörigen Achsschenkel 7 mit der Wirkung beaufschlagt, dass über jeweils eine der die Stellzylinder 20 und 21 verbindenden Druckleitungen 22 der Stellzylinder 21 beaufschlagt wird, dessen Kolben sich jedoch am Achsschenkel 7 des zugehörigen Vorderrades abstützt und daher nur unter einer gleichzeitigen Verschwenkung der vorderen Tandemachse 2 verlagert werden kann, sodass über das hydraulische Gestänge 19 die Zwangsabhängigkeit der Lenkausschläge der beiden Tandemachsen 2, 3 sichergestellt wird.

Wie unmittelbar aus dem Ausführungsbeispiel ersichtlich wird, bedingen Leckverluste in den hydraulischen Gestängen 13 und 19, die ja jeweils einen geschlossenen Hydraulikkreis darstellen, eine Veränderung der Lenkgeometrie, die tunlichst zu vermeiden ist. Aus diesem Grund sind die die Stellzylinder 14 bzw. die Stellzylinder 20, 21 verbindenden Druckleitungen 23 bzw. 22 dieser hydraulischen Gestänge 13 bzw. 19 auf der Seite der Kolbenstangen über je ein Rückschlagventil 24 an einen Druckspeicher 25 für das hydraulische Druckmittel angeschlossen, über den in einfacher Art Leckverluste an hydraulischem Druckmittel ausgeglichen werden können.

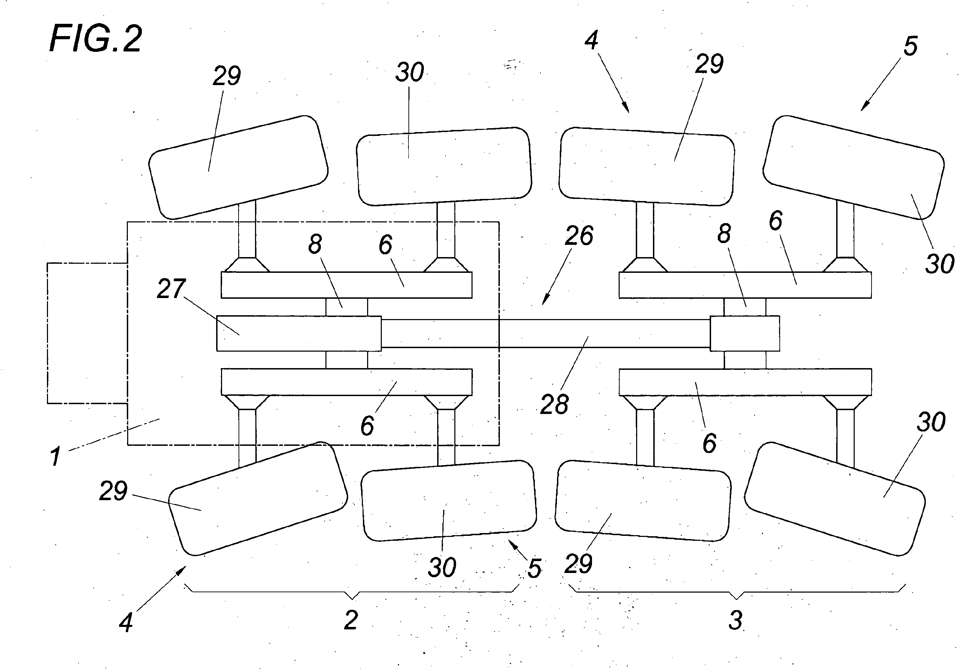

In der Fig. 2 ist ein Fahrgestell für ein erfindungsgemäßes Nutzfahrzeug 1 schematisch dargestellt. Man erkennt einen Längsträger 26 in Form von zwei koaxialen, gegeneinander um ihre Achse drehbar gehaltenen Trägerrohren 27 und 28, die den Antriebsstrang für die angetriebenen Räder 29 und 30 der Achsen 4 und 5 der beiden Tandemachsen 2 und 3 aufnehmen. Dieser Antriebsstrang umfasst gegebenenfalls sperrbare Differentiale zwischen den angetriebenen Rädern 29, 30 auf den beiden Fahrzeugseiten. Die Aufteilung des Antriebsstrangs auf die Räder 29 und 30 der vorderen und hinteren Tandemachsen 2, 3 erfolgt über Zahnradgetriebe innerhalb der Schwingen 6, wie dies an sich bekannt ist. Wegen der in Verbindung mit dem Blockschaltbild der Fig. 1 näher erläuterten Lenkung der beiden Tandemachsen 2, 3, die in einer eingeschlagenen Lenkstellung für eine Kurvenfahrt nach links gezeichnet sind, bedarf es keiner aufwendigen Steuerelektronik, sodass sich einfache Konstruktionsverhältnisse ergeben, die sich insbesondere für den im Allgemeinen rauen Nutzfahrzeugbetrieb eignen. Aufgrund der voneinander unabhängigen Drehlagerung der Schwingen 6 der Tandemachsen 2, 3 und der zusätzlichen gegenseitigen Verdrehmöglichkeit der Tandemachsen 2 und 3 um eine durch den Längsträger 26 bestimmte Längsachse ergibt sich eine gute Geländegängigkeit des Nutzfahrzeugs 1, ohne dass es einer federnden Abstützung der Tandemachsen 2, 3 bedarf. Die Räder 29, 30 der Tandemachsen 2 und 3 können sich somit aufgrund der voneinander unabhängigen Lagerung der Schwingen 6 um zwei zueinander senkrechte Drehachsen in vorteilhafter Weise an Geländeunebenheiten anpassen, wobei die dabei gegebenenfalls auftretenden Reaktionskräfte die gute Lenkbarkeit des Nutzfahrzeugs 1 nicht beeinträchtigen. Außerdem kann der Achsabstand zwischen den beiden Tandemachsen 2, 3 in einfacher Weise an verschiedene Anforderungen angepasst werden, wenn die beiden Trägerrohre 27, 28 des Längsträgers 26 in Längsrichtung gegeneinander verschiebbar ausgebildet werden,

## Patentansprüche

1. Nutzfahrzeug (1) mit zwei Tandemachsen (2, 3), die jeweils um eine gemeinsame Querachse (8) schwenkbar gelagerte Schwingen (6) aufweisen, auf denen über eine Lenkstange (10) miteinander verbundene Achsschenkel (7) der beiden Achsen (4, 5) der Tandemachsen (2, 3) lagern, **gekennzeichnet durch** ein die beiden Achsschenkel (7) einer der beiden Achsen (4, 5) der Tandemachsen (2, 3) mit-einander verbindendes, hydraulisches Gestänge (13), das über zwei Stellzylin-der (14) an den beiden Achsschenkeln (7) angreift, und einen Lenktrieb, der an den Achsschenkeln (7) der beiden Tandemachsen (2, 3) angreifende, über eine Steuereinrichtung (15) in einer Reihenschaltung beaufschlagbare, hydraulische Lenkzylinder (11, 12) umfasst, wobei die beiden Tandemachsen (2, 3) miteinander zusätzlich über ein hydraulisches Gestänge (19) mit zwei je an einem Achsschenkel (7) einer der beiden Achsen (4, 5) der Tandemachsen (2, 3) angreifenden Stellzylindern (20, 21) verbunden sind.

2. Nutzfahrzeug nach Anspruch 1, **dadurch gekennzeichnet, dass** die die Stellzylinder (14; 20, 21) auf der Seite der Kolbenstangen verbindenden Druckleitungen (23; 22) der hydraulischen Gestänge (13, 19) über Rückschlagventile (24) an einen Druckspeicher (25) für das hydraulische Druckmittel angeschlossen sind.

3. Nutzfahrzeug nach Anspruch 1 oder 2, **dadurch gekennzeichnet, dass** die beiden Tandemachsen (2, 3) gegeneinander um eine in Fahrzeuglängsrichtung verlaufende Achse drehbar gelagert sind.

4. Nutzfahrzeug nach Anspruch 3, **dadurch gekennzeichnet, dass** die beiden Tandemachsen (2, 3) je auf einem von zwei koaxialen, gegeneinander um ihre Achse drehbar gelagerten Trägerrohren (27, 28) eines Längsträgers (26) angeordnet sind.

5. Nutzfahrzeug nach Anspruch 4, **dadurch gekennzeichnet, dass** der Achsabstand zwischen den beiden Tandemachsen (2, 3) durch eine gegenseitige Längsverschiebung der Trägerrohre (27, 28) des Längsträgers (26) einstellbar ist.

## Claims

1. Commercial vehicle (1) having two tandem axles (2, 3) which each comprise rocker arms (6) mounted so as to be pivotable about a common transverse axis (8), wherein axle legs (7), which are connected together via a steering rod (10), of the two axles (4, 5) of the tandem axles (2, 3) are mounted on the rocker arms, **characterised by** a hydraulic linkage (13) which connects the two axle legs (7) of one of the two axles (4, 5) of the tandem axles (2, 3) together and engages the two axle legs (7) via two adjusting cylinders (14), and by a steering drive which includes hydraulic steering cylinders (11, 12) which engage the axle legs (7) of the two tandem axles (2, 3) and can be acted upon via a control device (15) in a series connection, wherein the two tandem axles (2, 3) are connected together additionally via a hydraulic linkage (19) having two control cylinders (20, 21), each one engaging one axle leg (7) of one of the two axles (4, 5) of the tandem axles (2, 3).

2. Commercial vehicle as claimed in claim 1, **characterised in that** the pressure lines (23; 22) of the hydraulic linkages (13, 19), which lines connect the control cylinders (14; 20, 21) on the side of the piston rods, are connected to a pressure accumulator (25) for the hydraulic pressure medium via non-return valves (24).

3. Commercial vehicle as claimed in claim 1 or 2, **characterised in that** the two tandem axles (2, 3) are mounted so as to be rotatable with respect to each other about an axis extending in the vehicle longitudinal direction.

4. Commercial vehicle as claimed in claim 3, **characterised in that** the two tandem axles (2, 3) are arranged one on each of two coaxial support pipes (27, 28), mounted so as to be rotatable with respect to each other about their axis, of a longitudinal support (26).

5. Commercial vehicle as claimed in claim 4, **characterised in that** the distance between the two tandem axles (2, 3) can be adjusted by a mutual longitudinal displacement of the support pipes (27, 28) of the longitudinal support (26).

## Revendications

1. Véhicule utilitaire (1) avec deux essieux en tandem (2, 3) qui présentent respectivement des bielles (6) placées pivotantes autour d'un axe transversal (8) commun sur lesquelles sont placées des fusées d'essieu (7), reliées ensemble par le biais d'une tige de direction (10), des deux essieux (4, 5) des essieux en tandem (2, 3), **caractérisé par** une tringlerie (13) hydraulique reliant ensemble les deux fusées d'essieu (7) d'un des deux essieux (4, 5) des essieux en tandem (2, 3) qui est en prise par le biais de deux vérins d'actionnement (14) au niveau des deux fusées d'essieu (7) et par un mécanisme de direction qui comprend des vérins de direction (11, 12) hydrauliques, pouvant être sollicités dans un montage en série par le biais d'un dispositif de commande (15), venant en prise au niveau des fusées d'essieu (7) des deux essieux en tandem (2, 3), les deux essieux en tandem (2, 3) étant reliés ensemble en plus par le biais d'une tringlerie (19) hydraulique, avec deux vérins d'actionnement (20, 21), venant chacun en prise au niveau d'une fusée d'essieu (7) d'un des deux essieux (4, 5) des essieux en tandem (2, 3).

2. Véhicule utilitaire selon la revendication 1, **caractérisé en ce que** les conduites de pression (23, 22), reliant les vérins d'actionnement (14, 20, 21) sur le côté des tiges de piston, de la tringlerie hydraulique (13, 19) sont raccordées par le biais de clapets anti-retour (24) au niveau d'un accumulateur de pression (25) pour le moyen de pression hydraulique.

3. Véhicule utilitaire selon la revendication 1 ou 2, **caractérisé en ce que** les deux essieux en tandem (2, 3) sont placés, l'un par rapport à l'autre, de manière rotative autour d'un axe situé dans le sens longitudinal du véhicule.

4. Véhicule utilitaire selon la revendication 3, **caractérisé en ce que** les deux essieux en tandem (2, 3) sont disposés chacun sur un des deux tubes supports (27, 28), placés coaxialement, de manière rotative, l'un par rapport à l'autre autour de leur axe, d'un support longitudinal (26).

5. Véhicule utilitaire selon la revendication 4, **caractérisé en ce que** l'entraxe entre les deux essieux en tandem (2, 3) peut être réglé par un déplacement longitudinal mutuel des tubes supports (27, 28) du support longitudinal (26).
